# EUROPÄISCHE PATENTANMELDUNG

(11) **EP 0 940 357 A1**
(43) Veröffentlichungstag der Anmeldung: **08.09.1999**
(21) Anmeldenummer: 99104493.4
(22) Anmeldetag: 05.03.1999
(51) Int. Cl.: B65G 57/30, B65G 59/06, B65G 60/00, F25D 25/04, F27B 9/14, F27B 9/02

(54) **Vertikalfördervorrichtung für in einem Stapel aufeinanderliegende Objekte, Durchlaufofen mit einer solchen Vertikalfördervorrichtung sowie Träger für eine solche Vertikalfördervorrichtung**

(30) Priorität: 05.03.1998 DE 19809555
(71) Anmelder: Lükon Paul Lüscher Werke AG, 2575 Täuffelen (CH)
(72) Erfinder: Lüscher, Bernhard P., 2575 Täuffelen (CH); Lüscher, Markus, 2575 Täuffelen (CH)
(74) Vertreter: Winter, Brandl & Partner

(57) **Zusammenfassung**

Es wird eine Vertikalfördervorrichtung bereitgestellt, die eine Vielzahl von zu befördernden Objekten schrittweise in vertikaler Richtung befördert, wobei der Abrieb minimal ist. Hierbei werden die zu befördernden Objekte gestapelt und durch eine Hubeinrichtung angehoben. Mittels einer Querfördereinrichtung wird ein neues Objekt von unten unter dem Stapel eingeführt und dann ebenfalls angehoben.

## Beschreibung

Die Erfindung betrifft eine Vertikalfördervorrichtung für in einem Stapel aufeinanderliegende Objekte, einen Durchlaufofen mit einer solchen Vertikalfördervorrichtung sowie einen Träger für eine solche Vertikalfördervorrichtung.

Aus den Druckschriften DD-PS 273 045 und DD-PS 272 054 sind Vorrichtung zum vertikalen Stapeln von vorzugsweise umgeformten Werkstücken bekannt, bei denen die einzelnen Werkstücke zwischen zwei einander gegenüberliegen Haltebalken angeordnet sind und auf jeweils für die einzelnen Werkstücke vorgesehenen Halteelementen aufliegen. Im Falle der DD-PS 273 045 umfassen die Haltebalken umlaufende Ketten an deren Kettenelementen die Halteelemente in Form von hervorstehenden Zacken angeordnet sind. Im Falle der DD-PS 272 054 sind in vertikaler Richtung an den Haltebalken jeweils Halteklinken für die Werkstücke angeordnet. In beiden Fällen werden die einzelnen Werkstücke von unten mittels eines Hubtisches in die Position der jeweiligen Halteelemente angehoben.

Aus der DE-A-1 285 401 ist ebenfalls eine Vertikalfördervorrichtung bzw. eine Stapelvorrichtung für flächige Tabletts bekannt, die eine Halteeinrichtung mit vier Halteelementen umfaßt, die seitlich zu dem Stapel angeordnet sind und mit dem untersten Tablett in Eingriff bringbar und daraus wieder lösbar sind. Um eine Querfördereinrichtung werden die einzelnen Tabletts unter den Stapel herangeführt. Eine Hubeinrichtung führt das durch die Querfördereinrichtung herangeführte Objekt von unten an den Stapel heran und drückt die Halteelemente der Halteeinrichtung, die mit Federkraft beaufschlagt sind seitlich weg, bis die Halteelemente für die Haltevorrichtung wieder unter das herangeführte Objekt zurückfedern und es damit und den Stapel halten.

Der Nachteil dieser bekannten Vertikalfördervorrichtungen bzw. Stapelvorrichtungen besteht darin, daß durch schleifende Kontakte, der Kette an den Haltebalken, der Klinken an den Werkstücken und der Halteelemente beim Ausklinken und Zurückfedern, Abrieb erzeugt wird, so daß derartige Stapelvorrichtungen im Bereich der Halbleitertechnologie nicht einsetzbar sind.

Aus der DE-A1-196 19 486 ist eine Vertikalfördervorrichtung und ein damit ausgerüsteter Druchlaufofen bekannt, bei dem das Problem des Abriebs durch schleifende Kontakte durch ein Walking-Beam-Konzept vermieden ist. Nachteilig hierbei ist die mechanische Komplexizität und das Problem der Abschattung der einzelnen Heizlüfter durch die Halte- und/oder Transportbalken.

Ausgehend von der DE-A-1 285 401 ist es Aufgabe der vorliegenden Erfindung, eine Vertikalfördervorrichtung zu schaffen, bei der Abrieb minimiert ist.

Die Lösung dieser Aufgabe erfolgt durch die Merkmale des Anspruch 1.

Dadurch, daß die Halteelemente mittels der Antriebseinrichtung synchron zur Bewegung der unteren Querfördereinrichtung und der Hubeinrichtung betätigt und nicht wie bei dem nächstkommenden Stand der Technik durch den Hubtisch entgegen der Federkraft weggedrückt werden, werden die schleifenden Kontakte zwischen den Werkstücken und den Halteelementen aus dem Stand der Technik vollständig vermieden und somit der Abrieb minimiert. Darüber hinaus sind die Hubeinrichtung und die Querfördereinrichtung zur Beförderung der Objekte in zwei Richtungen, d.h. von unten nach oben und von oben nach unten bzw. von links nach rechts und von rechts nach links ausgelegt.

Gemäß einer vorteilhaften Ausgestaltung der Erfindung sind die Halteelemente insbesondere in Form von Halteklingen ausgebildet, die seitlich in einer Richtung senkrecht zur Transportrichtung hin- und herbewegt und dadurch mit den zu befördernden Objekten in Eingriff gebracht werden bzw. daraus wieder gelöst werden.

Gemäß einer weiteren vorteilhaften Ausgestaltung der Erfindung bestehen die zu befördernden Objekte aus Trägern, in denen die eigentlich zu befördernden Produkte angeordnet sind. Die Halteklingen bzw. Halteelemente greifen in entsprechende Ausnehmungen an den Trägern ein. Die Träger umfassen Abstandselemente mit oberen und unteren Kontaktbereichen an denen die einzelnen Träger im Stapel aufeinander liegen bzw. an denen zwei unmittelbar benachbarte Träger in mechanischem Kontakt sind. Die Höhe der Abstandselemente in Transportrichtung bestimmt die Schritthöhe der Fördervorrichtung. Damit ist es möglich, durch geeignete Träger die Vertikalfördervorrichtung der vorliegenden Erfindung für unterschiedliche Produkte zu nutzen.

Die Vertikalfördervorrichtung gemäß der vorliegenden Erfindung läßt sich besonders vorteilhaft in einem vertikalen Durchlaufofen verwenden, wie sie z.B. in der Halbleiterherstellung verwendet werden. Da bei der erfindungsgemäßen Fördervorrichtung schleifende Kontakte vermieden werden und folglich kaum Abrieb entsteht, sind damit versehene Durchlauföfen für die empfindlichen Halbleiterprodukte und -herstellungsprozesse besonders geeignet. Da durch die besonders ausgebildeten Träger bei geringeren und mittleren Stapelhöhen keinerlei seitliche Führungen notwendig sind, wird auch im Ofenbereich schleifender Kontakt und damit Abrieb vollständig vermieden. Darüber hinaus zeichnet sich die Erfindung durch ihre mechanische Einfachheit aus, was insbesondere bei der Haltbarkeit und bei der Wartung Vorteile hat. Durch das Fehlen von Halte- oder Transportbalken im Ofenbereich lassen sich unterschiedlichste Temperaturzonen über die vertikale Höhe des Stapels realisieren. Wärmeverluste aufgrund der verschiedene Heiz- und Temperaturzonen durchsetzenden Halte- und Transportbalken (siehe DE-A1-196 19 486) treten nicht auf. Ebenso kann aufgrund der fehlenden Halte- und Transportbalken keine Abschattung der Heißluft aus den Heizgebläsen stattfinden, was die Temperaturhomgenität positiv beeinflußt.

Die übrigen Unteransprüche beziehen sich auf weitere vorteilhafte Ausgestaltungen der Erfindung. Weitere Einzelheiten, Merkmale und Vorteile der Erfindung ergeben sich aus der nachfolgenden Beschreibung einer beispielhaften Ausführungsform der Erfindung anhand der Zeichnung.

Es zeigt:
Fig. 1 eine schematische Seitenansicht eines vertikalen Durchlaufofens mit zwei nebeneinander angeordneten vertikalen Fördervorrichtungen,
Fig. 2 einen Schnitt durch die Darstellung nach Fig. 1 entlang der Linie A-A,
Fig. 3a bis 3g schematische Darstellung zur Erläuterung des Transportablaufs der vertikalen Fördervorrichtung gemäß der vorliegenden Erfindung,
Fig. 4 eine Fig. 2 entsprechende Darstellung mit Details der vertikalen Fördervorrichtung,
Fig. 5a und 5b Seitenansichten der Hubeinrichtung und der Halteeinrichtung bzw. der Halteklingen,
Fig. 6a eine Seitenansicht eines Trägers, und
Fig. 6b eine Aufsicht auf den Träger.

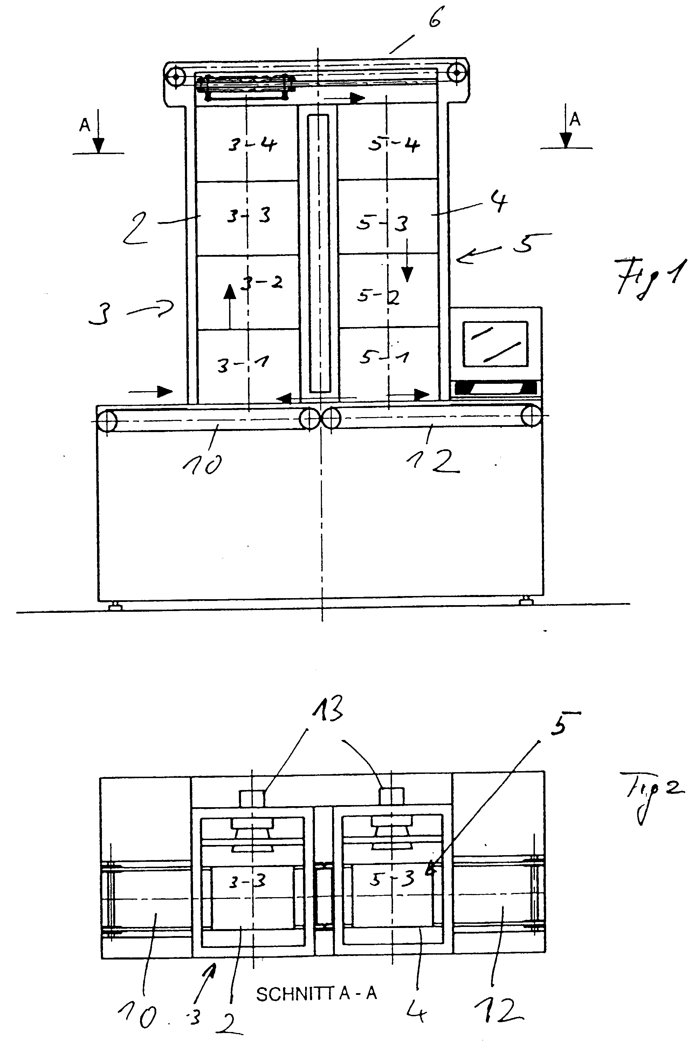

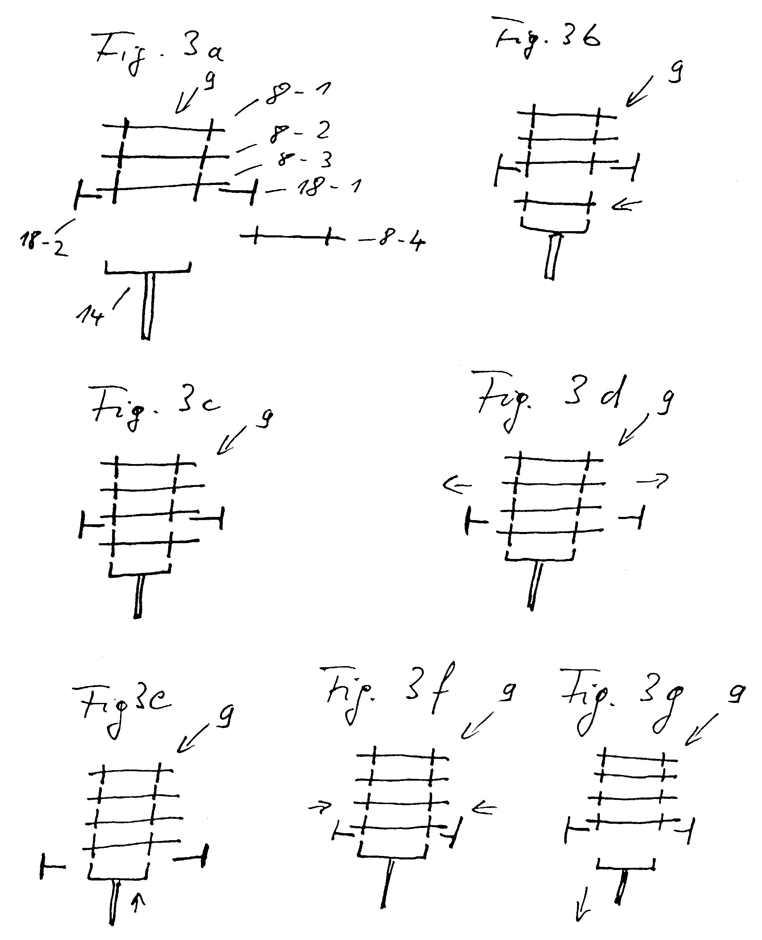

Fig. 1 zeigt eine schematische Seitenansicht einer beispielhaften Ausführungsform eines vertikalen Durchlaufofens gemäß der vorliegenden Erfindung. Fig. 2 zeigt eine zugehörige Schnittansicht entlang der Linie A-A in Fig. 1. Der in Fig. 1 und 2 dargestellte vertikale Durchlaufofen umfaßt eine erste und zweite vertikale Fördervorrichtung 2 bzw. 4, die einen ersten und einen zweiten Ofenbereich 3 bzw. 5 mit jeweils vier Temperatur- bzw. Heizzonen 3-1, 3-2, 3-3, 3-4, 5-1, 5-2, 5-3 und 5-4 durchsetzen. Am oberen Enden der beiden Ofenbereiche 3 und 5 bzw. der beiden vertikalen Fördervorrichtungen 2 und 4 ist eine obere Querfördereinrichtung 6 angeordnet, die in der ersten vertikalen Fördervorrichtung 2 nach oben beförderte Träger 8 von der ersten Vertikalfördervorrichtung 2 zu der zweiten Vertikalfördervorrichtung 4 transportiert. Die erste vertikale Fördervorrichtung 2 umfaßt eine zugeordnete erste untere Querfördervorrichtung 10 mittels der die Träger 8 zugeführt werden. Ebenso umfaßt die zweite Vertikalfördervorrichtung 4 eine zugeordnete zweite untere Querfördervorrichtung 12 mittels der die Träger 8 abtransportiert werden. Es sei darauf hingewiesen, daß sich die erste und zweite Vertikalfördervorrichtung 2 und 4 lediglich hinsichtlich der Transportrichtung unterscheiden. Die obere Querfördervorrichtung 6 ist vorzugsweise entsprechend der in der gleichzeitig hinterlegten Anmeldung DE 19809556.2 beschriebenen Querfördervorrichtung ausgebildet. Alternativ kann auch die aus der DE-A1-196 19 485 bekannte Querfördervorrichtung verwendet werden. Diesbezüglich wird auf die Druckschrift DE-A1-196 19 485 vollinhaltlich bezug genommen.

In Fig. 2 sind auch zwei Heizgebläse 13 zu den beiden Heizzonen 3-3 und 5-3 dargestellt.

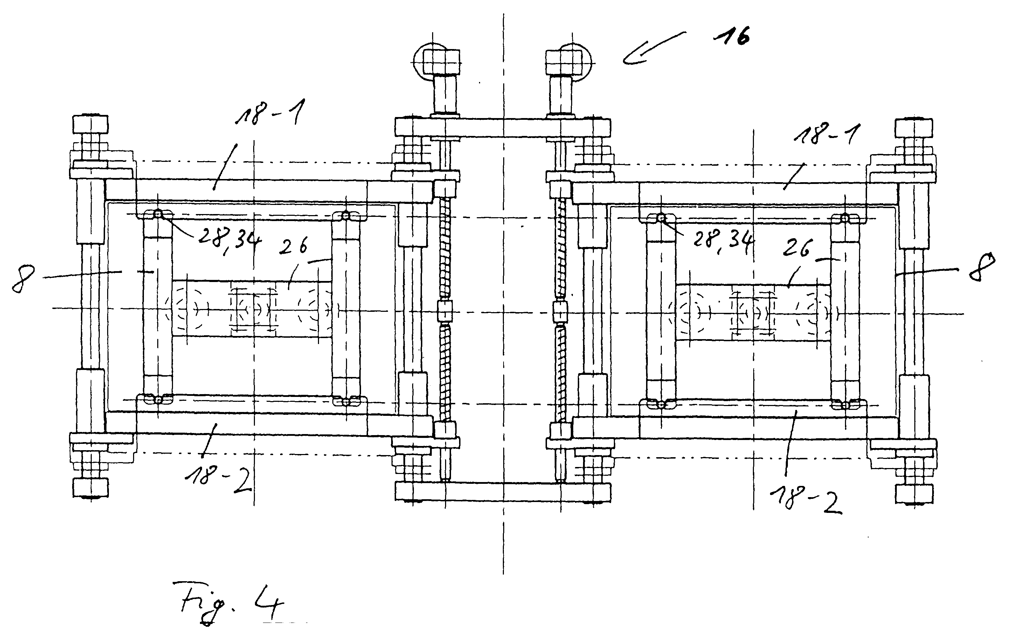

Nachfolgend wird der prinzipielle Aufbau und der Transportablauf der Vertikalfördervorrichtung gemäß der vorliegenden Erfindung anhand der Fig. 3a bis 3g beschrieben. Die in Fig. 3 schematisch dargestellte Vertikalfördervorrichtung umfaßt beispielhaft vier Träger 8-1, 8-2, 8-3 und 8-4, die einen Stapel 9 bilden, eine Hubeinrichtung 14 zum Anheben der Träger 8 an den Stapel 9 bzw. zum Abnehmen der Träger 8 von der Unterseite des Stapels 9, und eine Halteeinrichtung 18 mit zwei Halteelementen 18-1 und 18-2. Die zugehörigen Querfördereinrichtungen 10 bzw. 12 zum Zuführen bzw. Abführen der Träger 8 von bzw. zu der Unterseite des Stapels 9 sind in Fig. 3 nicht gezeigt.

Fig. 3a zeigt den Stapel 9 mit den drei Trägern 8-1, 8-2 und 8-3 wobei der unterste Träger 8-3 durch die Halteelemente 18-1 und 18-2 gehalten wird. Die Hubeinrichtung 14 ist in ihrer unteren Stellung und der Träger 8-4 ist noch seitlich unterhalb des Stapels angeordnet. Fig. 3b zeigt den Träger 8-4 unter dem Stapel und die Hubeinrichtung 14 ist bereits in Eingriff mit dem Träger 8-4. Fig. 3c zeigt den Zustand mit angehobener Hubeinrichtung, die den Träger 8-4 in Eingriff mit dem Träger 8-3 bringt, wobei die Halteelemente 18-1 und 18-2 noch in Eingriff mit dem Träger 8-3 sind. Die Fig. 3d zeigt den Zustand in dem die Halteelemente 18-1 und 18-2 seitlich senkrecht zur Transportrichtung weggefahren sind und nunmehr der gesamte Stapel 9 von der Hubeinrichtung 14 gehalten wird. Fig. 3e zeigt den Zustand in dem die Hubeinrichtung 14 den gesamten Stapel um eine Schritthöhe angehoben hat und in Fig. 3f werden die Halteelemente 18-1 und 18-2 in Eingriff mit dem nunmehr untersten Träger 8-4 gebracht. Fig. 3g zeigt schließlich die Hubeinrichtung wieder in ihrer untersten Stellung und der Stapel 9 wird wieder von der Halteeinrichtung 18 gehalten, wobei die Halteelemente 18-1 und 18-2 in Eingriff mit dem untersten Träger 8-4 sind.

Nach diesem Grundmuster lassen sich eine Vielzahl von Träger 8-i aufeinanderstapeln, wobei die einzelnen Träger 8-i nach oben wandern. Am oberen Ende der ersten Vertikalfördervorrichtung 2 angekommen wird der jeweils oberste Träger 8 von der oberen Querfördereinrichtung 6 zu der zweiten Vertikal fördervorrichtung 4 transportiert. In der zweiten Vertikalfördervorrichtung 4 werden dann in analoger Weise zu dem Ablauf nach Fig. 3 die einzelnen Träger 8 von oben nach unten befördert und durch die zweite untere Querfördervorrichtung 12 entnommen bzw. abgeführt.

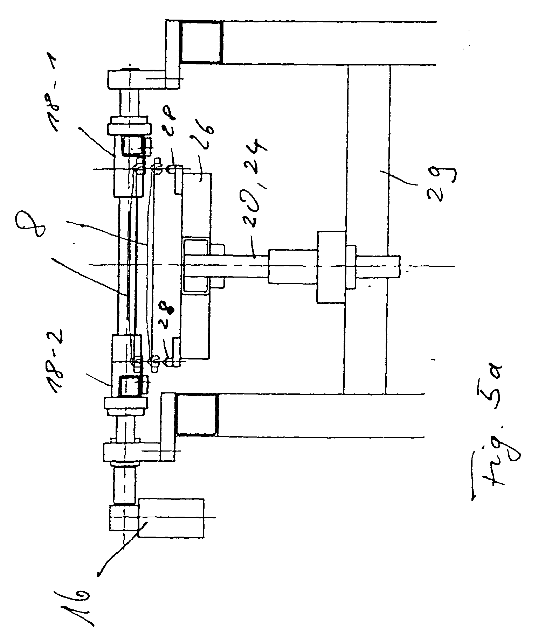

Fig. 4 zeigt eine Fig. 2 entsprechende detailierter Darstellung von oben auf den vertikalen Durchlaufofen mit den beiden vertikalen Fördervorrichtungen 2 und 4 und den Ofenbereichen 3 und 5. Weiter sind in Fig. 4 einzelne Elemente einer Antriebseinrichtung 16 gezeigt, mittels der die beiden Vertikalfördervorrichtungen 2 und 4 sowie die drei Querfördervorrichtungen 10, 6 und 12 synchron angetrieben werden. Von den beiden Hubeinrichtungen 14 sind jeweils deren Halteklingen 18-1 und 18-2 sichtbar sind.

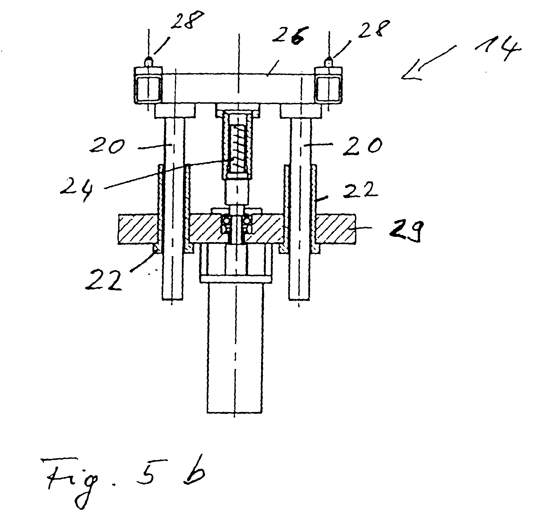

Weitere Details der Hubeinrichtung 14 sind aus den beiden Seitenansichten nach Fig. 5a und 5b zu ersehen. Demnach umfaßt die Hubeinrichtung 14 zwei Führungsstangen 20, einen Hubzylinder 24 und einen Hubteller 26 mit jeweils vier Aufsätzen 28, die an die Träger 8 angreifen. Der Hubzylinder 24 ist auf einer Grundplatte 29 befestigt. Die beiden Führungsstangen 20 sind mittels zweier Gleitlager 22 in der Grundplatte 29 gelagert.

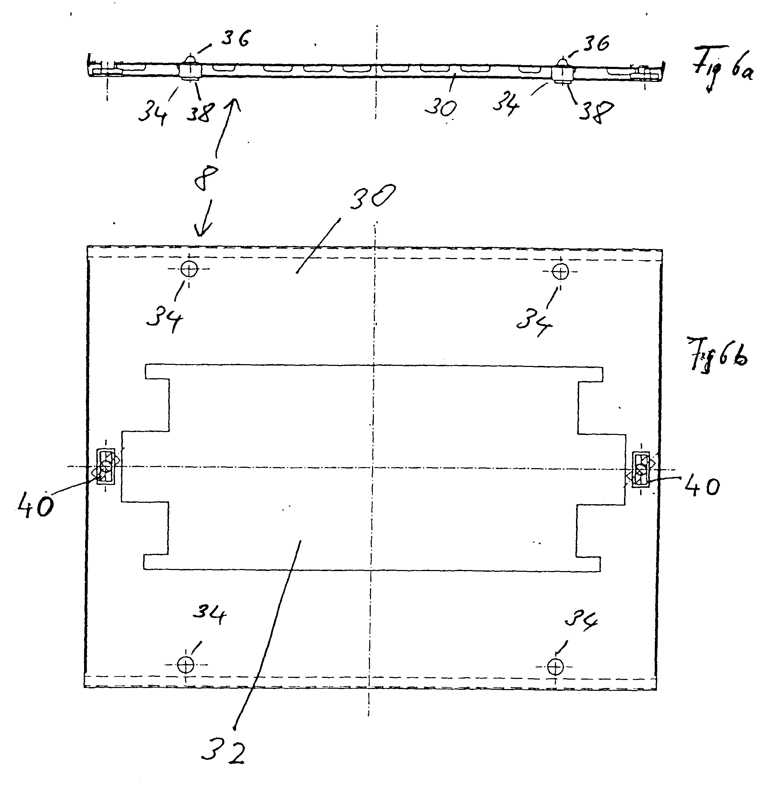

Die Fig. 6a und 6b zeigen eine beispielhafte Ausführungsform des Trägers 8 in Seitenansicht und in Aufsicht. Der bzw. die Träger 8 besitzen einen flachen rechteckigen Trägerrahmen 30 mit einer Aufnahme 32 für die zu befördernden Produkte, vier Abstandselementen 34, die jeweils einen oberen und einen unteren Kontaktbereich 36 bzw. 38 umfassen. Die Abstandselemente 34 sind im Randbereich des Trägerrahmens 30 an dessen Längsseite angeordnet. An den beiden kürzeren Seiten des Trägerrahmens 30 ebenfalls im Randbereich sind rechteckige Durchbrüche 40 vorgesehen, in die die obere Querfördervorrichtung 6 eingreift, um die Träger 8 von der ersten Vertikalfördervorrichtung 2 zu der zweiten Vertikalfördervorrichtung 4 zu transportieren. Wie aus Fig. 6a zu ersehen ist, sind die Abstandselemente 34 in ihrem oberen Kontaktbereich 36 als konische Spitze ausgebildet und in ihrem unteren Kontaktbereich 38 als zu der konischen Spitze passende konische Ausnehmung ausgebildet, wodurch die an dem jeweiligen Kontaktbereich aufeinderliegenden Träger 8 selbst-zentrierend sind. Damit können je nach Ausmaß der Träger 8 vergleichsweise große Stapelhöhen erreicht werden, ohne daß eine seitliche Führung des Stapels 9 notwendig wird. Die Aufsätze 28 der Hubeinrichtung 14 sind wie der obere Kontaktbereich 36 der Abstandselemente 34 konisch spitz ausgebildet.

Hinsichtlich des Aufbaus und der Ausgestaltung der oberen Querfördervorrichtung 6 wird auf die am gleichen Tag hinterlegte Anmeldung mit dem Anwaltsaktenzeichen P/11LU4108/DE verwiesen und hiermit vollinhaltlich bezug genommen.

### Bezugszeichenliste:

- 2: erste vertikale Fördervorrichtung
- 3: erster Ofenbereich
- 3-i: Temperatur- bzw. Heizzonen von 3
- 4: zweite vertikale Fördervorrichtung
- 5: zweiter Ofenbereich
- 5-i: Temperatur- bzw. Heizzonen von 5
- 6: obere Querfördervorrichtung
- 8: Träger
- 8-i: einzelne Träger
- 9: Stapel
- 10: erste untere Querfördervorrichtung
- 12: zweite untere Querfördervorrichtung
- 13: Heizgebläse
- 14: Hubeinrichtung
- 18: Halteeinrichtung
- 18-i: Halteklingen
- 16: Antriebseinrichtung
- 20: Führungsstangen
- 22: Gleitlager
- 24: Hubzylinder
- 26: Hubteller
- 28: Aufsätze auf Hubteller
- 29: Grundplatte
- 30: Trägerrahmen
- 32: Aufnahme in 30
- 34: Abstandselemente
- 36: oberer Kontaktbereich
- 38: unterer Kontaktbereich
- 40: Durchbrüche

## Patentansprüche

1. Fördervorrichtung zum Befördern einer Mehrzahl von in einem Stapel (9) aufeinanderliegender Objekte (8) im wesentlichen in vertikaler Richtung in diskreten Schritten, mit
einer Halteeinrichtung (18) mit wenigstens zwei Halteelementen (18-1, 18-2), die seitlich neben dem Stapel (9) aus Objekten angeordnet sind, die wenigstens mit dem untersten Objekt im Stapel (9) in Eingriff bringbar und daraus wieder lösbar ist,
einer unteren Querfördereinrichtung (10; 12) zum Zuführen von Objekten unter den Stapel,
einer Hubeinrichtung (14) zum Anheben des zuletzt durch die Querfördereinrichtung (10; 12) zugeführten Objekts an den Stapel (9) und zum Anheben des gesamten Stapels (9) um eine Schritthöhe, und
einer Antriebseinrichtung zum synchronen Betätigen der Hubeinrichichtung (14) und der Querfördereinrichtung (10; 12), **dadurch gekennzeichnet**,
daß die Halteelemente (18-1, 18-2) durch die Antriebseinrichtung synchron zu der Bewegung der Querfördereinrichtung (10; 12) und der Hubeinrichtung (14) mit dem Stapel (9) in Eingriff bringbar und daraus wieder lösbar sind,
daß durch die untere Querfördereinrichtung (10; 12) bei einer Transportrichtung von unten nach oben Objekte (8) unter den Stapel (9) zuführbar und bei einer Transportrichtung von oben nach unten von unter dem Stapel (9) abführbar sind, und
daß durch die Hubeinrichtung (14) bei einer Transportrichtung von unten nach oben von der unteren Querfördereinrichtung (10) zugeführte Objekte (8) anhebbar und bei einer Transportrichtung von oben nach unten das jeweils unterste Objekt (8) im Stapel (9) absenkbar ist.

2. Fördervorrichtung nach Anspruch 1, dadurch gekennzeichnet, daß die wenigstens zwei Halteelemente (18-1, 18-2) in einer Richtung senkrecht zur Transportrichtung hin- und herbewegbar sind.

3. Fördervorrichtung nach Anspruch 1 oder 2, dadurch gekennzeichnet, daß die Halteelemente zwei Halteklingen (18-1, 18-2) sind, die in eine entsprechend geformte Ausnehmung in den zu befördernden Objekten (8) eingreifen.

4. Fördervorrichtung nach einem der vorhergehenden Ansprüche, dadurch gekennzeichnet, daß die Hubeinrichtung (14) einen Hubteller (26), auf dem die zu befördernden Objekte (8) aufliegen, und einen Hubmechanismus (20, 22, 24, 29) zum Anheben und Absenken des Hubtellers (26) umfaßt.

5. Fördervorrichtung nach Anspruch 4, dadurch gekennzeichnet, daß die Hubeinrichtung (14) wenigstens eine Führungsstange (20, 22) umfaßt, die mit dem Hubteller (26) verbunden ist.

6. Vorrichtung nach wenigstens einem der vorhergehenden Ansprüche, dadurch gekennzeichnet, daß die Ausdehnung der zu befördernden Objekte (8) in Transportrichtung die Schritthöhe des Anhebens bzw. Absenkens bestimmt.

7. Vorrichtung nach Anspruch 6, dadurch gekennzeichnet, daß die zu befördernden Objekte jeweils aus einem Träger (8) und wenigstens einem damit lösbar verbindbarem Produkt bestehen und daß die Halteelemente (18-1, 18-2) und die Hubeinrichtung an den Trägern (8) angreifen.

8. Vorrichtung nach Anspruch 6 oder 7, dadurch gekennzeichnet, daß die Träger (8) Abstandselemente (34) umfassen, die sich in Transportrichtung erstrecken und die jeweils obere und untere Kontaktbereichen (36, 38) aufweisen an denen die einzelnen Träger (8) im Stapel (9) aufeinanderliegen.

9. Vorrichtung nach Anspruch 8, dadurch gekennzeichnet, daß die Kontaktbereiche (36, 38) aufeinanderliegender Träger (8) selbstzentrierend sind.

10. Vorrichtung nach Anspruch 9, dadurch gekennzeichnet, daß die oberen Kontaktbereiche (36) der Abstandselemente (34) der Träger (8) konisch spitz und daß die unteren Kontaktbereiche (38) konisch vertieft ausgebildet sind.

11. Vertikaler Durchlaufofen, bei dem eine Mehrzahl von Trägern (8) einen vertikal angeordneten Ofenbereich (3, 5) durchlaufen, mit
einer Heiz/Kühlvorrichtung (13) zum Heizen und/oder Kühlen des Ofenbereichs (3, 5),
wenigstens einer Fördervorrichtung (2; 4) zum Befördern der Träger (8) durch den Ofenbereich (3, 5), und
einer Vorrichtung (6; 12) zum Entnehmen der Träger (8) aus dem Ofenbereich (3, 5), **dadurch gekennzeichnet,**
daß die wenigstens eine Fördervorrichtung (2; 4) eine Fördervorrichtung nach wenigstens einem der vorhergehenden Ansprüche 1 bis 10 ist.

12. Durchlaufofen nach Anspruch 11, gekennzeichnet durch wenigstens zwei Fördervorrichtungen (2, 4) mit vertikaler Transportrichtung nach wenigstens einem der Ansprüche 1 bis 10 und durch eine Querfördervorrichtung (6) zum Transportieren der Träger (8) von einer Fördervorrichtung (2) zur benachbarten Fördervorrichtung (4), wobei die Transportrichtung von zwei unmittelbar benachbarten Fördervorrichtungen (2, 4) entgegengesetzt ist.

13. Durchlaufofen nach Anspruch 11 oder 12, dadurch gekennzeichnet, daß der Ofenbereich mehrere Temperatur- bzw. Heizzonen (3-i, 5-i) umfaßt.

14. Träger für eine Fördervorrichtung nach einem der Ansprüche 1 bis 10, mit
einem flächigen Trägerrahmen (30) für zu befördernde Produkte,
einer Mehrzahl von an dem Trägerrahmen (30) befestigten Abstandselementen (34), die sich nach unten und oben von dem Trägerrahmen (30) wegerstrecken,
wobei die einzelnen Abstandselemente (34) jeweils obere und untere Kontaktbereichen (36, 38) aufweisen an denen die einzelnen Träger (8) im Stapel (9) aufeinanderliegen.

15. Träger nach Anspruch 14, dadurch gekennzeichnet, daß die Kontaktbereiche (36, 38) aufeinanderliegender Träger (8) selbstzentrierend sind.

16. Träger nach Anspruch 15, dadurch gekennzeichnet, daß die oberen Kontaktbereiche (36) der Abstandselemente (34) der Träger (8) konisch spitz und daß die unteren Kontaktbereiche (38) konisch vertieft ausgebildet sind.
